# EUROPÄISCHE PATENTANMELDUNG

(11) **EP 0 793 324 A2**
(43) Veröffentlichungstag der Anmeldung: **03.09.1997**
(21) Anmeldenummer: 97810077.4
(22) Anmeldetag: 12.02.1997
(51) Int. Cl.: H02G 5/00

(54) **System aus zumindest zwei durch Stromleiter verbundene Stromschienen**

(30) Priorität: 28.02.1996 DE 19607460; 08.03.1996 DE 19609006
(71) Anmelder: Alusuisse Technology & Management AG, 8212 Neuhausen am Rheinfall (CH)
(72) Erfinder: Glück, Joachim, 78713 Schramberg-Sulgen (DE)

(57) **Zusammenfassung**

Bei einem System aus zumindest zwei Stromschienen, insbesondere jeweils aus einem schienenförmigen Trägerprofil (12,14) und wenigstens einem mit dessen Matrix verbundenen Bandprofil (20) eines Metalls höherer Abriebfestigkeit bestehenden Verbundprofilen, bei dem die Schienenenden (10ₑ) zweier benachbarter Stromschienen (10) durch zumindest einen längenveränderlichen Stromleiter miteinander stromführend verbunden sind, werden die Schienenenden (10ₑ) aus der Mittelachse (M) ihrer Stromschiene (10) herausgebogen und zu dieser in einem Versetzungsmaß (n) so parallel geführt, daß das Bandprofil (20) des einen Schienenendes mit dem außerhalb des Schienenendes der anderen Stromschiene verlaufenden Bandprofil letzterer etwa fluchtet; die Schienenenden sind axial bewegbar miteinander verbunden.

## Beschreibung

Die Erfindung betrifft ein System aus zumindest zwei Stromschienen -- insbesondere jeweils aus einem schienenförmigen Trägerprofil und wenigstens einem mit dessen Matrix verbundenen Bandprofil eines Metalls höherer Abriebfestigkeit bestehenden Verbundprofilen --, bei dem die Schienenenden zweier benachbarter Stromschienen durch zumindest einen längenveränderlichen Stromleiter miteinander stromführend verbunden sind. Das erwähnte Trägerprofil besteht aus einem Schienenfuß und einem an diesen etwa mittig angeformten Schienenschenkel.

Verbundprofile aus zwei Profilkomponenten sind der DE-B- 24 32 541 zu entnehmen. Zu deren Herstellung wird während eines Strangpreßvorganges das Trägerprofil durch Auspressen eines Blockes durch den Formgebungsquerschnitt einer Leichtmetallmatrize erzeugt, und gleichzeitig durchläuft das Bandprofil den Matrizendurchbruch oder Formgebungsquerschnitt parallel zur Matrizenlängsachse.

Bei Systemen aus solchen Stromschienen sollen die Verbindungsbereiche benachbarter Stromschienen die -- gegebenenfalls etwa bei schwankenden Betriebs- und Umgebungstemperaturen entstehende -- Längenausdehnung kompensieren und das möglichst ununterbrochene Kontaktieren eines über den Verbindungsbereich der beiden Stromschienen schleifenden Stromabnehmers gewährleisten. Hierzu wurde beispielsweise vorgeschlagen, die Schienenstöße schräg abzulängen und seitlich durch Laschen zu verbinden. Auch werden Stromschienen aneinander parallel vorbeigeführt mit der Möglichkeit des Kommutierens des Stromabnehmers. Die bekannten Lösungen bedingen eine technisch aufwendige Installation aus einer Vielzahl von Sonderzubehörteilen bei erhöhtem Platzbedarf.

In Kenntnis dieses Standes der Technik hat sich der Erfinder das Ziel gesetzt, für derartige Verbindungsbereiche von Stromschienen -- insbesondere von Verbundprofilen T-förmigen Querschnitts -- eine kompakte Bauform zu entwickeln, die ohne Sonderzubehör mit den für normale Stromschienen zur Installation erforderlichen Systemteilen auskommt.

Zur Lösung dieser Aufgabe führt die Lehre der unabhängigen Patentansprüche; die Unteransprüche geben günstige Weiterbildungen an.

Erfindungsgemäß sind die Schienenenden aus der Mittelachse ihrer Stromschiene herausgebogen und zu dieser in einem Versetzungsmaß so parallel geführt, daß das Bandprofil des einen Schienenendes mit dem außerhalb des Schienenendes der anderen Stromschiene verlaufenden Bandprofil letzterer etwa fluchtet; die Schienenenden sind -- zur Kompensation von axialen Dehnungen -- miteinander axial bewegbar verbunden.

Dank dieser Maßgabe fluchtet das Bandprofil des Hauptabschnittes der einen Stromschiene nach dem Zusammenbau mit dem Bandprofilabschnitt des versetzten Schienenendes der anderen Stromschiene; die Schienenenden beider Stromschienen verlaufen zueinander parallel.

Bei Einsatz querschnittlich T-förmiger Stromschienen aus einem von einem Schienenfuß und einem an diesen etwa mittig angeformten Schienenschenkel gebildeten Tragprofil wird nach einem weiteren Merkmal der Erfindung in den Schienenkopf des Schienenschenkels das Bandprofil in der Schenkellängsachse unter Bildung einer Schleifebene eingebettet und im Bereich des Schienenendes in einem Versetzungsmaß von etwa einer Hälfte der Querschnittsbreite des Schienenschenkels seitenversetzt; der von einer Querschnittshälfte des Schienenfußes befreite Bereich soll sich dabei über die Stelle der Schienenkrümmung hinweg im Abstand zur Schienenstirnfläche erstrecken.

Als günstig hat es sich erwiesen, zwei Schienenenden mit ihrer jeweils vom hälftigen Schienenfuß freien Längsseite bei gegenläufigem Versetzungsmaß aneinander zu legen.

Zur Vereinfachung des Verbindungsvorganges wird das Schienenende an seinem Schienenschenkel nahe der Schienenstirnfläche mit einem achsparallelen langlochartigen Schlitz und einer diesem in seiner Verlängerung zugeordneten Bohrung für eine Schraube -- od. dgl. stiftartiges Verbindungselement -- versehen; der Schlitz verläuft bevorzugt nahe dem Schienenfuß zu diesem parallel, wohingegen die Bohrung zwischen Schlitz und Schienenstirnfläche angeordnet sein soll.

Durch diese Maßgaben können zwei Extremlagen eingestellt werden. In maximaler Länge des Verbindungsbereiches ist die in den Bohrungen des einen Schienenendes sitzende Schraube od.dgl. an dem seiner Schienenstirnfläche nahen Ende des Schlitzes des benachbarten Schienenendes angelegt.

In kürzester Länge des Verbindungsbereiches schlägt die in der Bohrung des einen Schienenendes sitzende Schraube od.dgl. an dem seiner Schienenstirnfläche fernen Ende des Schlitzes des benachbarten Schienenendes an.

Der elektrische Kontakt wird durch anpaßbare Stromleiter aufrechterhalten; beide Schienenenden sind durch einen flexiblen Stromleiter -- wie Dehnungsbänder, Kabel od.dgl. -- miteinander verbunden. Der bevorzugt bandartige Stromleiter ist jeweils durch ein gleitbares Querorgan an das Schienenende angeschlossen.

Im Rahmen der Erfindung wird vorteilhafterweise ein Verbundprofil eingesetzt, bei dem zumindest ein Profilband etwa rechtwinkelig oder geneigt zur Schleifebene in den Leichtmetallwerkstoff eingebettet ist. Nach einem anderen Merkmal der Erfindung verläuft ein Profilband in der Längsachse des Verbundprofils und eine Schmalkante des Profilbandes berührt als Schleiffläche jene Schleifebene.

Denkbar ist auch ein Verbundprofil mit beidseits der Längsachse und in Abstand zu ihr jeweils einem Profilband.

So entsteht eine kompakte und robuste Ausführung eines Schienenstoßes mit sehr geringer Länge des fertigen Dehnverbinders und verhältnismäßig großem möglichem Dehnmaß. Zudem wird ein mechanisch und elektrisch dauerhafter Kontakt des Stromschleifers mit dem Schienensystem beim Überfahren des Dehnverbinders gewährleistet; Stromlücken und Abrißlichtbögen werden zuverlässig vermieden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: die Stirnansicht eines Verbundprofils mit Schienenfuß, Schienenschenkel und darin eingebettetem Bandprofil als Stromschiene;
- Fig. 2:: eine Schrägsicht auf die Stromschiene nach teilweiser Verformung eines für eine Dehnverbindung vorgesehenen Endabschnittes;
- Fig. 3:: die gegenüber Fig. 1 vergrößerte Stirnansicht der Stromschiene mit teilweise abgetrenntem Schienenfuß und aus der Schienenlängsachse seitlich versetztem Endabschnitt;
- Fig. 4:: die Draufsicht auf eine Dehnverbindung zweier Stromschienen;
- Fig. 5, 6:: Seitenansichten des Dehnverbindungsbereiches in zwei unterschiedlichen Stellungen.

Eine Stromschiene 10 besteht aus einem -- einen Schienenfuß 12 sowie einen daran mittig angeformten Schienenschenkel 14 umfassenden -- T-förmigen Trägerprofil aus Leichtmetall und einem in dem als Schienenkopf 16 zu bezeichnenden freien Ende des Schenkels 14 sowie in der Schenkelachse A verlaufenden Bandprofil 20 aus einem anderen Metall hoher Abriebfestigkeit, insbesondere aus einem Stahlband. Am Übergang zwischen Schienenfuß 12 und Schienenschenkel 14 ist beidseits dessen je eine nutartige Auskehlung 18 zu erkennen.

Das flache Profilband 20, dessen zur Schenkelachse A parallele Höhe a etwas kürzer ist als die Höhe h der Stromschiene 10, ist während eines Strangpreßvorganges in eine das Trägerprofil ergebende Leichtmetallmatrix, insbesondere eine Matrix aus einer Aluminiumlegierung, eingebettet und mit dieser zumindest an seinen Profilseiten 22 intermetallisch -- sowie gegebenenfalls an in der Zeichnung nicht wiedergegebenen Riffelungen, Einformungen oder Durchgängen des Bandprofils 20 formschlüssig -- verbunden worden. Mit einer seiner Längskanten 24 liegt das Bandprofil 20 zwischen zwei pultartig geneigten Flankenflächen 17 des Schienenkopfes 16 an dessen Scheitel frei und bestimmt so eine sog. Schleifebene E für einen nicht dargestellten Stromabnehmer oder Stromschleifer.

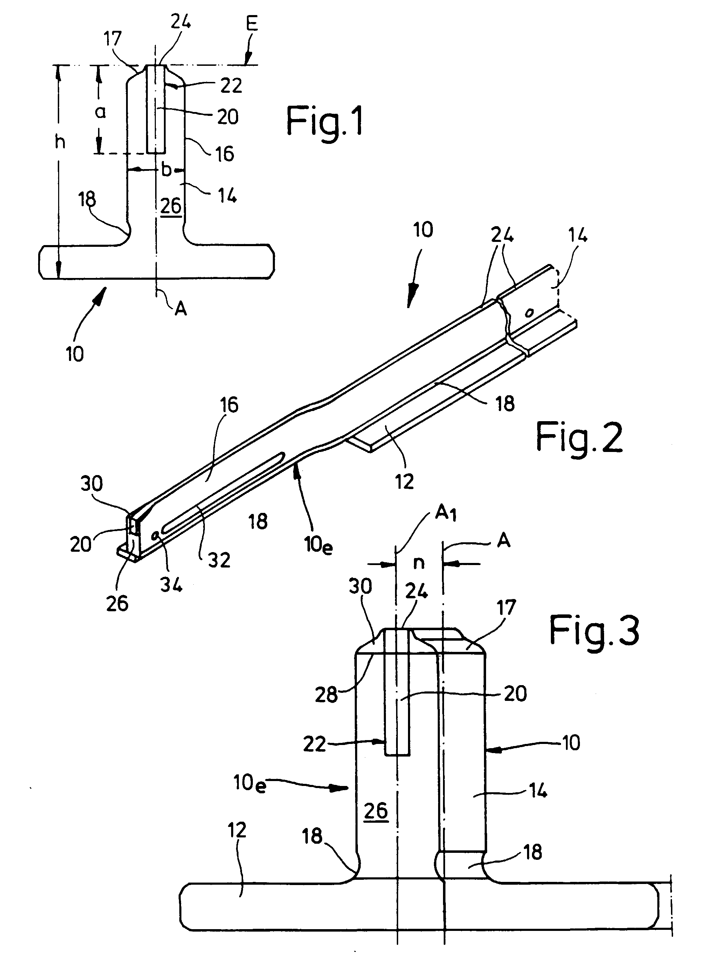

Um einen -- in Schienenlängsachse M auftretende axiale Dehnungen -- kompensierenden Anschluß an eine weitere Stromschiene 10 zu ermöglichen, wird bis zu einem Abstand e von der Schienenstirnfläche 26 die in Fig. 1, 2 rechte Hälfte des Schienenfußes 12 entfernt. In einem kürzeren Abstand f von der Schienenstirnfläche 26 ist das derart querschnittlich reduzierte Schienenprofil aus der Schienenlängsachse M der Stromschiene 10 herausgebogen, um -- in einem nochmals kürzeren Abstand i -- parallel zu jener Schienenlängsachse M als sog. Endabschnitt 10ₑ verlaufen zu können. Der besseren Übersicht halber ist die Schienenlängsachse dort mit M₁ bezeichnet.

Das Versetzungsmaß n zwischen der Schenkelachse A des Hauptteiles der Stromschiene 10 und der Schenkelachse A₁ des dazu seitlich versetzten Endabschnittes 10ₑ der Stromschiene 10 ist in Fig. 3 verdeutlicht; es beträgt etwas mehr als die Hälfte der Breite b des Schienenschenkels 14. Die seitlich versetzte Stirnfläche 26 ist bis zu den unteren Enden der Flankenflächen 17 gekürzt; es entsteht so eine zum Schienenfuß 12 parallele Firstlinie 28, von der aus eine Pultfläche 30 zur Schleifebene E des Schienenkopfes 16 schräg verläuft.

In dem Endabschnitt 10ₑ ist geringfügig oberhalb der Auskehlung 18 und zu dieser parallel ein langlochartiger Schlitz 32 angeordnet sowie zwischen diesem und der Stirnfläche 26 eine Querbohrung 34; letztere liegt auf der Längsachse des Schlitzes 32, also in dessen gedachter Verlängerung.

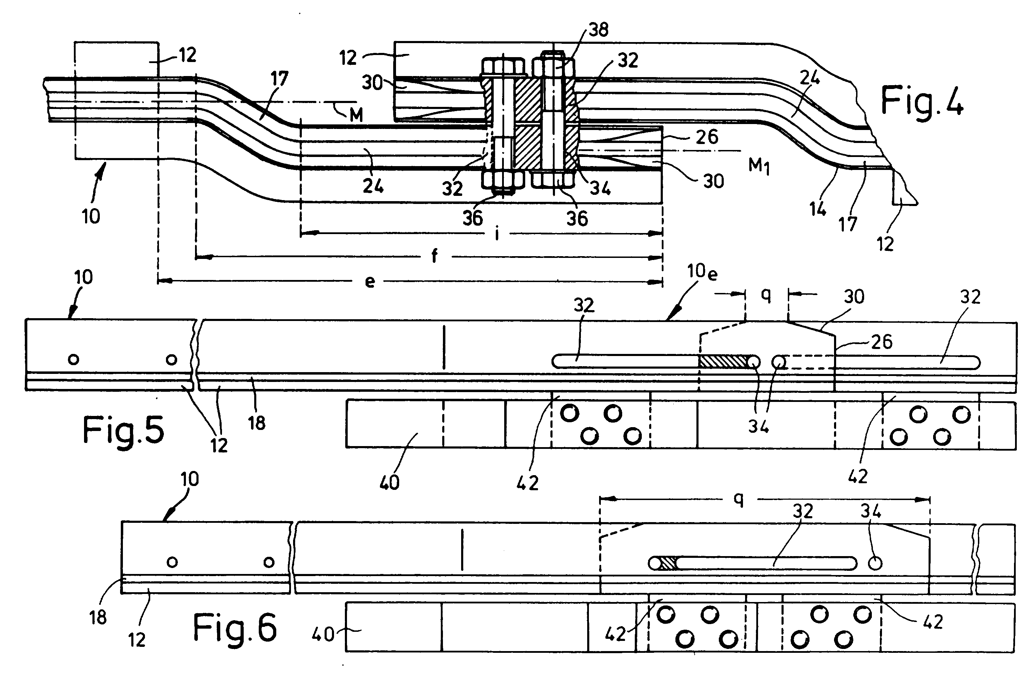

Fig. 4 zeigt zwei miteinander durch Schrauben 36 verbundene Stromschienenenden 10ₑ; diese Schrauben 36 sind zueinander gegenläufig durch jeweils eine Querbohrung 34 und einen benachbarten Schlitz 32 geführt und durch -- Unterlagscheiben 37 anliegende -- Muttern 38 verspannt.

Die beiden Endabschnitte 10ₑ sind in Fig. 5 in maximaler Länge des Bereiches der Dehnverbindung aneinandergefügt, d.h. die Schienenpaarung ist ausgefahren; die Schrauben 26 schlagen jeweils an dem seiner Schienenstirnfläche 26 nahen Ende des von ihnen durchgriffenen Schlitzes 32 an. Beide Schienenstirnflächen 26 sind in einem Überstandsmaß q zueinander angeordnet, welches einen ständigen elektrischen Kontakt zwischen Schienensystem 10/10 und Stromschleifer gewährleistet.

In Fig. 6 ist die kürzeste Länge des Bereiches der Dehnverbindung -- also in deren zusammengefahrenen Zustand -- angedeutet; die Schraube 36 des einen Schienenendes 10ₑ berührt das stirnflächenferne Ende des Schlitzes 32 im benachbarten Schienenende 10ₑ.

Jeweils unterhalb der Stromschienenenden 10ₑ sind in Fig. 5, 6 flexible Stromleiter 40 zur elektrischen Überbrückung zu erkennen. Der streifenförmige Stromleiter 40 ist mit jeweils einem an ihm verschieblichen Querband 42 an eines der Stromschienenenden 10ₑ angeschlossen.

## Patentansprüche

1. System aus zumindest zwei Stromschienen, insbesondere jeweils aus einem schienenförmigen Trägerprofil (12, 14) und wenigstens einem mit dessen Matrix verbundenen Bandprofil (20) eines Metalls höherer Abriebfestigkeit bestehenden Verbundprofilen, bei dem die Schienenenden (10ₑ) zweier benachbarter Stromschienen (10) durch zumindest einen längenveränderlichen Stromleiter miteinander stromführend verbunden sind,
dadurch gekennzeichnet,
daß die Schienenenden (10ₑ) aus der Mittelachse (M) ihrer Stromschiene (10) herausgebogen und zu dieser in einem Versetzungsmaß (n) so parallel geführt sind, daß das Bandprofil (20) des einen Schienenendes mit dem außerhalb des Schienenendes der anderen Stromschiene verlaufenden Bandprofil letzterer etwa fluchtet, wobei die Schienenenden axial bewegbar miteinander verbunden sind.

2. System nach Anspruch 1, dadurch gekennzeichnet, daß die beiden benachbarten Schienenenden (10ₑ) parallel zueinander verlaufen.

3. System mit einem Tragprofil aus einem Schienenfuß (12) und einem an diesen etwa mittig angeformten Schienenschenkel (14) nach Anspruch 1 oder 2, dadurch gekennzeichnet, daß in den Schienenkopf (16) des Schienenschenkels (14) das Bandprofil (20) in der Schenkel längsachse (A) oder parallel dazu unter Bildung einer Schleifebene (E) eingebettet und im Bereich des Schienenendes (10ₑ) in einem Versetzungsmaß (n) von etwa einer Hälfte der Querschnittsbreite (b) des Schienenschenkels seitenversetzt ist.

4. System nach einem der Ansprüche 1 bis 3, dadurch gekennzeichnet, daß sich der von einer Querschnittshälfte des Schienenfußes (12) befreite Bereich über die Stelle der Schienenkrümmung hinweg in einem Abstand (f) von der Schienenstirnfläche (26) erstreckt (Fig. 4).

5. System nach einem der Ansprüche 1 bis 4, dadurch gekennzeichnet, daß zwei Schienenenden (10ₑ) gegenläufigen Versetzungsmaßes (n) mit ihren vom Schienenfuß befreiten Längsseiten aneinandergelegt sind.

6. System nach einem der Ansprüche 1 bis 5, dadurch gekennzeichnet, daß das Schienenende (10ₑ) in seinem Schienenschenkel (14) nahe der Schienenstirnfläche (28) mit einem achsparallelen Schlitz (32) und einer diesem in seiner Verlängerung zugeordneten Bohrung (34) für eine Schraube (36) od.dgl. stiftartiges Verbindungselement versehen ist.

7. System nach einem der Ansprüche 1 bis 6, dadurch gekennzeichnet, daß der Schlitz (32) nahe dem Schienenfuß (12) zu diesem parallel verläuft.

8. System nach Anspruch 6 oder 7, dadurch gekennzeichnet, daß die Bohruna (34) zwischen Schlitz (32) und Schienenstirnfläche (26), angeordnet ist.

9. System nach wenigstens einem der Ansprüche 1 bis 8, dadurch gekennzeichnet, daß in maximaler Länge des Verbindungsbereiches die in den Bohrungen (34) des einen Schienenendes (10ₑ) sitzende Schraube (36) od.dgl. Verbindungselement an dem seiner Schienenstirnfläche (26) nahen Ende des Schlitzes (32) , des benachbarten Schienenendes angelegt ist.

10. System nach wenigstens einem der Ansprüche 1 bis 8, dadurch gekennzeichnet, daß in kürzerster Länge des Verbindungsbereiches die in der Bohrung (34) des einen Schienenendes (10ₑ) sitzende Schraube (36) od.dgl. Verbindungselement an dem seiner Schienenstirnfläche (26) fernen Ende des Schlitzes (32) des benachbarten Schienenendes angelegt ist.

11. System nach wenigstens einem der Ansprüche 1 bis 10, dadurch gekennzeichnet, daß das Schienenende (10ₑ) an seiner Schienenstirnfläche (26) mittels einer zu dieser geneigten Pultfläche (30) abgeschrägt ist.

12. System nach wenigstens einem der Ansprüche 1 bis 11, dadurch gekennzeichnet, daß die beiden Schienenenden (10ₑ) durch einen flexiblen Stromleiter (40) miteinander verbunden sind.

13. System nach Anspruch 12, dadurch gekennzeichnet, daß der bandartige Stromleiter (40) jeweils durch ein gleitbares Querorgan (42) an das Schienenende (10ₑ) angeschlossen ist.

14. System nach wenigstens einem der Ansprüche 1 bis 13, dadurch gekennzeichnet, daß das Bandprofil (20) mit Ausnehmungen, Durchsetzungen, Nuten od.dgl. Einformungen versehen ist.

15. System nach wenigstens einem der Ansprüche 1 bis 14, dadurch gekennzeichnet, daß das Bandprofil (20) zumindest an seinen Breitseiten (22) mit Retentionen wie Rändelungen oder Riffelungen versehen ist.

16. System nach wenigstens einem der Ansprüche 1 bis 15, gekennzeichnet durch eine zumindest an einer Flanke der Schmal- oder Längskante (24) verlaufende pultartig geneigte Seitenfläche (17) eines das Bandprofil (20) enthaltenden Schienenkopfes (16) der Leicht metallkomponente der Stromschiene (10).
